# FASCICULE DE BREVET EUROPEEN

(11) **EP 3 877 173 B1**
(45) Date de publication et mention de la délivrance du brevet: **30.03.2022**
(21) Numéro de dépôt: 19813093.2
(22) Date de dépôt: 23.10.2019
(51) Int. Cl.: B32B 7/06, B32B 7/12, B32B 3/02, B32B 27/08, B32B 27/30, B32B 38/00, B32B 38/04, B32B 3/08, B32B 3/26, B05C 21/00, B05D 1/32, B05B 12/24

(54) **DISPOSITIF DE MASQUAGE D'UNE ZONE À MASQUER ET PROCÉDÉ DE FABRICATION D'UN TEL DISPOSITIF DE MASQUAGE**
VORRICHTUNG ZUR MASKIERUNG EINES ZU MASKIERENDEN BEREICHS UND VERFAHREN ZUR HERSTELLUNG EINER SOLCHEN MASKIERUNGSVORRICHTUNG
DEVICE FOR MASKING A REGION TO BE MASKED, AND METHOD FOR MANUFACTURING SUCH A MASKING DEVICE

(30) Priorité: 05.11.2018 FR 1860173
(43) Date de publication de la demande: 15.09.2021
(73) Titulaire: Nehia Group, 31200 Toulouse (FR)
(72) Inventeur: DUBOIS, Philippe, 31880 LA SALVETAT SAINT GILLES (FR)
(74) Mandataire: Ipside
(86) Numéro de dépôt international: PCT/FR2019/052520
(87) Numéro de publication internationale: WO 2020/094943

(56) Documents cités:
- EP-A1- 3 287 195
- WO-A1-2012/160305
- FR-A1- 2 600 917

## Description

### Domaine de l'invention

La présente invention trouve sa place dans le domaine de la protection de zones de surfaces affectées par des opérations industrielles de traitement de surface, par exemple ayant pour fonctions la protection, le nettoyage ou la décoration de ladite surface.

L'invention relève des dispositifs de protection de zones de surfaces destinées à recevoir un liquide en application, permettant d'isoler lesdites zones de ce liquide et concerne plus particulièrement un dispositif de masquage d'une zone à masquer et un procédé de fabrication d'un tel dispositif de masquage.

La présente invention trouve une application particulièrement avantageuse, bien que nullement limitative, dans les dispositifs de masquage de hublots d'aéronefs avant peinture de leurs fuselages.

### État de l'art

Actuellement, on connaît différents dispositifs permettant de masquer une ou plusieurs zones d'une surface afin de protéger ces zones lors de l'application d'un traitement spécifique sur ladite surface. L'application dudit traitement peut éventuellement être mise en œuvre selon plusieurs opérations de traitement successives.

Dans le domaine de l'aéronautique, et en particulier dans le cadre de la peinture du fuselage d'un aéronef, des films adhésifs sont avantageusement collés sur des zones de la surface du fuselage pour les préserver de la peinture.

Dans le présent texte, dans un exemple d'application de l'invention, ces zones sont constituées par des hublots de l'aéronef.

Un hublot d'aéronef comporte de façon conventionnelle un vitrage encastré dans un cadre métallique riveté au fuselage de l'aéronef. Le hublot comprend un joint interposé entre le vitrage et le cadre métallique. En amont des opérations de peinture, un masque, sous la forme d'un film adhésif, est superposé au hublot de sorte à recouvrir le vitrage et en partie le joint.

Une fois le masque posé, il est procédé au ponçage du fuselage et à l'application de plusieurs couches de peinture (généralement trois couches). Certains masques, tels que décris par le document WO2012/160305, comprennent des collerettes périphériques superposées les unes aux autres, qui sont chacune retirées après séchage de chaque couche de peinture. L'état de l'art inclut également le kit de masquage décrit dans le document EP 3 287 195 A1.

Malgré les avantages que présentent ces masques, leur fabrication est relativement longue et fastidieuse.

### Exposé de l'invention

La présente invention a pour objectif de palier les inconvénients précités en proposant un dispositif de masquage d'une zone à masquer pouvant être rapidement produit et facile à utiliser.

À cet effet, l'invention concerne un dispositif de masquage d'une zone à masquer, comprenant :
- un film de masquage comprenant une face inférieure adhésive contre laquelle est collée de manière amovible un film de protection,
- au moins quatre collerettes superposées et collées les unes aux autres de manière amovible, dont une dite « collerette inférieure » est collée à une face supérieure du film de masquage opposée à la face inférieure, chacune des collerettes étant délimitée entre une périphérie interne et une périphérie externe, les périphéries externes des collerettes étant affleurantes les unes avec les autres, et les périphéries internes des collerettes étant au moins en partie affleurantes les unes avec les autres.

Grâce à ces caractéristiques, il est possible de réaliser un minimum d'opérations de découpe pour réaliser les collerettes. Plus particulièrement, une unique découpe est possible le long de la portion sur laquelle les périphéries internes des collerettes sont affleurantes les unes aux autres, pour générer lesdites collerettes.

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, la périphérie interne de chaque collerette est configurée de sorte à former une languette s'étendant vers l'intérieur du film de masquage, chaque languette étant configurée de sorte à être dépourvue de capacité adhésive sur au moins une portion de sa surface s'étendant depuis la périphérie interne.

Cette caractéristique permet une meilleure préhension des collerettes.

Dans des modes particuliers de réalisation de l'invention, le film de masquage est pourvu d'ouvertures traversantes, la périphérie de chaque ouverture présentant une forme oblongue s'étendant selon une direction sensiblement parallèle ou sensiblement tangente à la direction d'une portion de la périphérie externe des collerettes dont elle est voisine.

Cette caractéristique est avantageuse dans la mesure où les ouvertures, par leur forme, permettent de guider le positionnement du film de masquage sur la zone à masquer.

Dans des modes particuliers de réalisation de l'invention, le film de masquage est pourvu d'ouvertures et les collerettes sont configurées de sorte qu'au voisinage des ouvertures, leur périphérie interne forme une échancrure dimensionnée de sorte que ladite échancrure soit interposée entre chaque ouverture et la périphérie externe desdites collerettes.

Ces échancrures permettent avantageusement de laisser apparaître la face supérieure du film de masquage au voisinage des ouvertures, c'est-à-dire sur au moins une portion de la périphérie desdites ouvertures.

Ces échancrures permettent avantageusement une fabrication plus aisée du dispositif de masquage.

Elles permettent également une utilisation plus simple du dispositif de masquage, dans la mesure où ces échancrures peuvent également constituer des repères de positionnement dudit dispositif sur la zone à masquer. Elles peuvent, en outre, favoriser le décollage de chaque collerette.

Dans des modes particuliers de réalisation de l'invention, chaque échancrure forme un arc de cercle concave et est configurée de sorte qu'une ouverture est agencée dans la concavité de ladite échancrure.

Grâce à cette caractéristique, la fabrication des échancrures des collerettes est facilitée.

La présente invention concerne également, selon un autre aspect, un procédé de fabrication d'un dispositif de masquage tel que décrit ci-avant comprenant les étapes de :
- Impression d'une silhouette sur une face supérieure d'une feuille support comprenant une face inférieure adhésive sur laquelle est collée une feuille de protection, ladite silhouette correspondant sensiblement à la forme des périphéries externes des collerettes, par un tracé externe, et à la forme des périphéries internes des collerettes, par un tracé interne,
- Agencement d'un écran de protection présentant des dimensions sensiblement égales à celles du tracé interne, sur la silhouette de sorte que l'écran de protection coïncide sensiblement, par sa périphérie, avec le tracé interne,
- Superposition d'une pluralité de feuilles adhésives sur la feuille support de sorte à recouvrir la silhouette et l'écran de protection, les feuilles adhésives présentant des dimensions sensiblement égales à celles de la feuille support,
- Découpe mi-chair, en une même passe, des feuilles adhésives selon au moins une partie du tracé interne de la silhouette et selon une profondeur de coupe correspondant à l'épaisseur de la totalité desdites feuilles adhésives,
- Extraction des découpes réalisées dans les feuilles adhésives et de l'écran de protection associé,
- Découpe pleine chair selon le tracé externe de la silhouette.

Dans des modes particuliers de mise en œuvre de l'invention, le procédé de fabrication comprend les étapes de :
- Découpe pleine chair d'ouvertures entre le tracé interne et le tracé externe de la silhouette,
- Découpe mi-chair de la feuille de protection autour de chaque ouverture de sorte à laisser apparaître une bande annulaire de la face adhésive du film destinée à recevoir un opercule.

Dans des modes particuliers de mise en œuvre de l'invention, le procédé de fabrication comprend une étape d'application d'un opercule transparent contre chacune des bandes annulaires de sorte que lesdites vignettes soient collées contre la face inférieure de la feuille support et qu'elles recouvrent chaque ouverture.

Dans des modes particuliers de mise en œuvre de l'invention, le procédé de fabrication comprend une étape de découpe pleine chair d'ouvertures entre le tracé interne et le tracé externe de la silhouette. En outre, lors de l'étape de découpe mi-chair, la découpe est réalisée de sorte à former des échancrures s'étendant depuis le tracé interne vers le tracé externe, de sorte que chaque échancrure contourne une ouverture.

### Présentation des figures

L'invention sera mieux comprise à la lecture de la description suivante, donnée à titre d'exemple nullement limitatif, et faite en se référant aux figures qui représentent :
- Figure 1 : une vue de face d'un dispositif de masquage d'une zone à masquer selon l'invention,
- Figure 2 : une vue de derrière d'un dispositif de masquage selon la figure 1,
- Figure 3 à 5 : une vue de face représentant la réalisation d'étapes successives d'un procédé de fabrication d'un dispositif de masquage selon les figures 1 et 2.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description détaillée de l'invention

L'invention concerne, selon un premier aspect, un dispositif de masquage 10 d'une zone à masquer.

Il y a lieu de noter que dans la présente description, l'invention est décrite dans un exemple de réalisation dans lequel elle est appliquée au domaine de l'aéronautique et plus particulièrement, dans lequel un dispositif de masquage 10 selon la présente invention est destinée à protéger un hublot d'un aéronef de projections de peinture d'un fuselage dudit aéronef. La zone à masquer est donc ici caractérisée par un hulot d'un aéronef.

Le dispositif de masquage 10 comprend un film de masquage 11, préférentiellement souple, réalisé par exemple par laminage de matériaux plastiques comme du PVC (acronyme de l'expression anglaise « Poly Vynil Chlorid »).

Le film de masquage 11 comprend une face adhésive, appelée ci-après « face inférieure », enduite d'une substance adhésive, c'est-à-dire d'un matériau synthétique permettant de faire adhérer deux surfaces l'une à l'autre. La substance adhésive est choisie de sorte à présenter une capacité adhésive telle qu'elle permet au film de masquage 11 d'être immobilisé contre la zone à masquer durant une durée prédéfinie, à rester solidaire du film de masquage 11 lorsque celui-ci est retiré de ladite zone, ainsi qu'à ne pas laisser de résidus sur ladite zone suite au retrait du film de masquage 11.

Contre la face inférieure est collée de manière amovible un film de protection 12, par exemple réalisée en papier siliconé de sorte à permettre le stockage du film de masquage 11 et sa manipulation.

Ledit film de masquage 11 est destiné à être collé contre la zone à masquer par sa face inférieure, une fois le film de protection 12 retiré. Le film de masquage 11 est par conséquent configuré pour présenter des dimensions sensiblement identiques à celles de ladite zone.

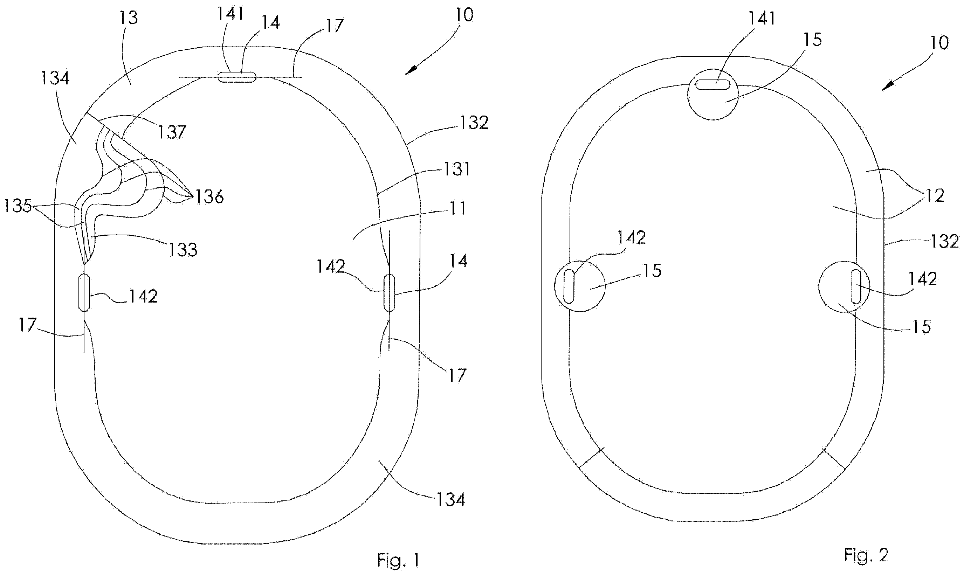

Dans l'exemple de réalisation représenté par les figures 1 et 2, le film de masquage 11 s'étend selon un axe longitudinal et présente une forme sensiblement oblongue, de sorte à être adapté au masquage de hublots d'un aéronef. Rien n'exclut cependant d'avoir un film de masquage 11 de forme différente dès lors que ce dernier est adapté à masquer la zone. Par exemple, sans que cela soit détaillé plus avant, le film de masquage 11 peut être de forme rectangulaire avec des bords arrondis ou bien encore plus généralement elliptique ou ovale.

La face du film de masquage 11 opposée à la face inférieure est appelée ci-après « face supérieure ».

Le dispositif comprend également une pluralité de collerettes 13, préférentiellement au moins quatre. Les collerettes 13 sont superposées les unes aux autres sur le film de masquage 11 et sont délimitées entre une périphérie interne 131 et une périphérie externe 132, la collerette attenante à la face supérieure du film de masquage 11 étant ici appelée « collerette inférieure » 133 et la collerette opposée à la collerette inférieure 133, c'est-à-dire la collerette entièrement en vis-à-vis de l'environnement extérieur est appelé « collerette supérieure » 134. Les collerettes 13 agencées entre la collerette inférieure 133 et entre la collerette supérieure 134 sont appelées ici collerettes intermédiaires 135.

Chaque collerette comprend une face adhésive, par laquelle elle est fixée au dispositif, c'est-à-dire, soit au film de masquage 11 pour la collerette inférieure 133, soit à une autre collerette pour les collerettes intermédiaires 135 et la collerette supérieure 134, et une face supérieure opposée à la face adhésive.

Comme le montre la figure 1, la périphérie externe 132 de chaque collerette est affleurante à la périphérie externe 132 de la ou des collerettes 13 attenantes. De manière analogue, au moins une portion de la périphérie interne 131 de chaque collerette 13 est affleurante à au moins une portion de la périphérie interne 131 de la ou des collerettes 13 attenantes.

La périphérie interne 131 de chaque collerette 13 est configurée de sorte à former une languette 136 s'étendant vers l'intérieur du film de masquage 11. Plus précisément, les languettes 136 s'étendent en longueur selon une direction orientée vers un point quelconque de l'axe longitudinal du film de masquage 11. Préférentiellement, les languettes 136 s'étendent toutes selon des directions coaxiales. Alternativement, les languettes 136 peuvent être réparties le long des périphéries internes 131 des collerettes 13 de sorte qu'elles s'étendent selon des axes non coaxiaux.

Chaque languette 136 est configurée de sorte à être dépourvue de capacité adhésive sur au moins une portion de la face adhésive de la collerette 13 s'étendant depuis sa périphérie interne 131, de sorte que chaque languette 136 présente une extrémité libre facilement manipulable.

Par exemple, chaque languette 136 peut comprendre un insert (non visible sur les figures), par exemple sous la forme d'une feuille de papier, de plastique, ou de tout autre matériau approprié, collé sur une portion de la face adhésive de chaque languette 136, ayant pour effet de faire écran entre ladite portion de la face adhésive sur laquelle elle est collée et la surface supérieure de la collerette 13 en vis-à-vis ou la face supérieure du film de masquage 11.

Préférentiellement, les languettes 136 de chaque collerette 13 présentent des dimensions, notamment des longueurs, différentes les unes des autres, dans le sens où la languette 136 de la collerette inférieure 133 est configurée pour présenter des dimensions supérieures à celles des autres languettes 136, la languette 136 de la collerette supérieure 134 étant configurée pour présenter des dimensions inférieures à celles des autres languettes 136.

Autrement dit, les dimensions des languettes 136 sont choisies de sorte que chaque languette 136 laisse apparaître la périphérie interne de la languette 136 immédiatement inférieure.

Le film de masquage 11 est pourvu d'au moins trois ouvertures 14 traversantes permettant de visualiser au moins une partie de la zone à masquer lorsque le dispositif de masquage 10 est utilisé. Les ouvertures 14 sont avantageusement agencées à proximité de la périphérie interne 131 de chaque collerette 13. La périphérie desdites ouvertures 14 présente avantageusement une forme oblongue et présente un axe de symétrie longitudinal et un axe de symétrie transversal.

Grâce à la forme particulière des ouvertures 14, il est plus aisé de positionner le dispositif de masquage 10 par rapport à la zone qu'il est destiné à protéger. En effet, les ouvertures 14 peuvent alors servir pour guider précisément le positionnement dudit dispositif par rapport aux éléments de la zone apparaissant à travers ces dernières, notamment le joint du hublot à masquer.

Préférentiellement, chaque ouverture 14 s'étend selon une direction sensiblement parallèle ou sensiblement tangente à la direction d'une portion de la périphérie externe 132 des collerettes 13 la plus proche, comme le montre les figures 1 et 2.

Les ouvertures 14 sont agencées sur le film de masquage 11 dans une disposition selon laquelle ils forment les sommets d'un triangle sensiblement isocèle. À cet effet, une des ouvertures 14, dite « ouverture centrale » 141, est positionnée de sorte que son axe de symétrie transversale soit confondue avec l'axe longitudinal du film de masquage 11. Par ailleurs, les deux autres ouvertures 14, dites «ouvertures latérales» 142 sont préférentiellement positionnées en vis-à-vis, de façon symétrique l'une de l'autre par rapport à l'axe longitudinal du film de masquage 11, par exemple sur un axe transversal dudit film de masquage 11.

Ainsi, le positionnement du film de masquage 11 sur le hublot est particulièrement facilité. En effet, dans un premier temps, un utilisateur doit seulement positionner de façon adéquat l'ouverture centrale 141 par rapport au hublot et coller sur une faible surface ledit film de masquage 11 au niveau de ladite ouverture centrale 141 afin de former un point de fixation. Dans un second temps, il suffit à l'utilisateur de positionner les ouvertures latérales 142 de façon adéquate par rapport au hublot, par exemple en inclinant légèrement le film de masquage 11 selon un axe de rotation situé sur le point de fixation, et de coller tout ou partie du reste de la face interne du film de masquage 11 sur le hublot.

De façon alternative, les deux ouvertures latérales 142 peuvent servir à positionner le film de masquage 11 sur la zone avec une bonne précision dans un premier temps, l'ouverture centrale 141 pouvant dès lors servir soit à vérifier le positionnement initial, soit à parfaire ledit positionnement initial dans un second temps par une légère translation le long d'un axe parallèle à l'axe longitudinal du film de masquage 11.

Une telle configuration, notamment en ce qui concerne l'agencement des ouvertures 14, est très avantageuse car elle réduit significativement les risques d'erreurs de positionnement du film de masquage 11 sur la zone ainsi que le nombre d'actions correctives éventuellement nécessaires à ce positionnement. Toutefois, rien n'exclut d'avoir un nombre différent d'ouvertures 14 ainsi qu'une disposition différente desdites ouvertures 14.

Comme le montre la figure 2, le film de protection 12 présente autant d'opercules 15 que le film de masquage 11 présente d'ouvertures 14. Chaque opercule 15 est agencé de sorte à recouvrir une ouverture 14 et est collée de façon amovible contre la surface inférieure du film de masquage.

Les ouvertures 14 sont recouvertes par des opercules 15 transparents permettant de voir à travers lesdites ouvertures 14 tout en les obturant de façon hermétique afin d'éviter toute migration de fluide à travers lesdites ouvertures 14. Préférentiellement, les opercules 15 sont réalisés en matière plastique souple.

Une telle configuration des ouvertures 14 et des opercules 15 est particulièrement avantageuse dans la mesure où lesdits opercules 15 permettent de voir à travers le film de masquage 11 tout en protégeant la zone à masquer.

Des repères visuels 17 sont représentés à proximité de chaque ouverture 14 de sorte à guider le positionnement du dispositif de masquage 10 sur la zone à masquer. Dans l'exemple de réalisation représenté sur la figure 1, chaque repère visuel 17 est constitué par un trait avantageusement agencé de façon coaxiale à l'axe de symétrie longitudinale de l'ouverture 14. Les traits sont avantageusement imprimés sur la face supérieure du film de masquage 11.

Les traits sont configurés de sorte que lors de la mise en position du dispositif de masquage 10 contre le hublot, ils doivent être positionnés de manière à coïncider avec la périphérie d'un joint du hublot.

Comme le montre la figure 1, préférentiellement, les collerettes 13 ne présentent pas d'ouverture 14. En effet, les collerettes 13 sont configurées de sorte qu'au voisinage des ouvertures 14, leur largeur, définie comme étant la distance entre leur périphérie interne 131 et leur périphérie externe 132, soit localement réduite.

Par exemple, au voisinage de chaque ouverture 14, la périphérie interne 131 peut former une échancrure dimensionnée de sorte que ladite périphérie interne 131 des collerettes 13 ne soit pas confondue avec la périphérie desdites ouvertures 14.

Autrement dit, les portions de la périphérie interne 131 des collerettes 13 étant au voisinage des ouvertures 14 sont en retrait vers la périphérie externe 132, de sorte que leur largeur, définie comme étant la distance entre leur périphérie interne 131 et leur périphérie externe 132, soit localement réduite audit voisinage des ouvertures 14.

Dans un exemple de réalisation de l'invention non représenté sur les figures, chaque échancrure peut former un arc de cercle concave, chaque ouverture 14 étant agencée dans la concavité de l'échancrure. Les échancrures peuvent être configurées de sorte à présenter un axe de symétrie sensiblement confondu avec l'axe de symétrie transversale de l'ouverture 14.

Les échancrures permettent de laisser apparent les repères visuels 17 imprimés sur la face supérieure du film de masquage 11, en totalité ou en partie, de sorte qu'elles contribuent à faciliter le positionnement du film de masquage 11.

Avantageusement, les collerettes 13 présentent une découpe ou une prédécoupe radiale 137 s'étendant sur l'ensemble de leur largeur. Cette découpe ou prédécoupe radiale 137 a pour effet de faciliter le décollage de chaque collerette 13. Préférentiellement, cette découpe ou prédécoupe radiale 137 est agencée au voisinage des languettes 136.

Un autre objet de la présente invention concerne un procédé de fabrication d'un dispositif de masquage 10 tel que précédemment décrit.

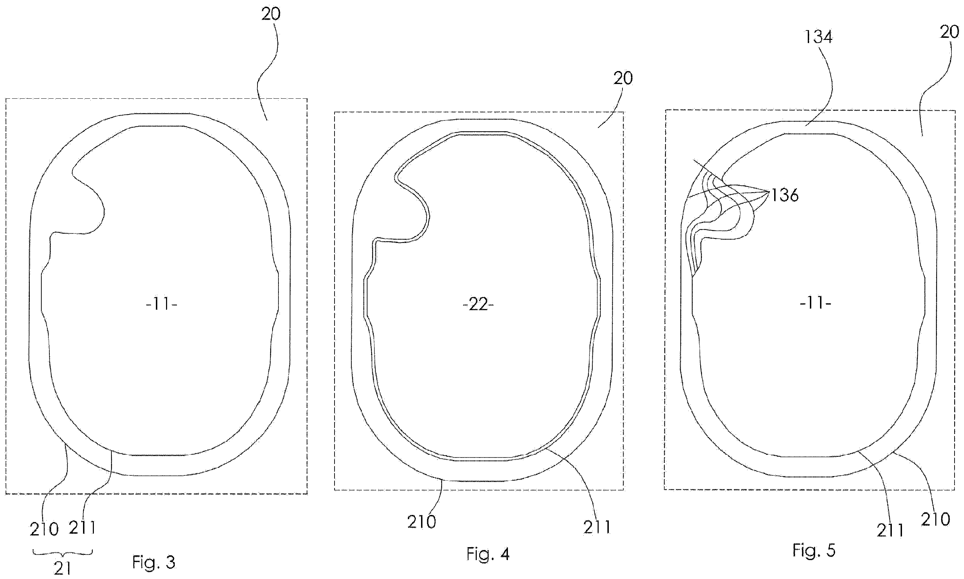

Le procédé comprend une première étape d'impression, sur une face supérieure d'une feuille support 20 comprenant une face inférieure adhésive, d'une silhouette 21 correspondant sensiblement à la forme des périphéries externes 132 et interne 131 des collerettes 13. Sur les figures 3 à 6 sont représentées une partie d'une feuille support 20 et une silhouette 21. Toutefois, on comprend ici qu'il est imprimé autant de silhouettes 21 que de dispositifs de masquage 10 à produire. Dans ce cas, les silhouettes 21 sont avantageusement régulièrement distribuées sur la surface de la face supérieure de la feuille support 20, par exemple en quinconce.

La silhouette 21 comprend un tracé externe 210 présentant sensiblement les mêmes dimensions que la périphérie externe 132 des collerettes 13 ou que la périphérie du film de masquage 11, et un tracé interne 211 sensiblement de la même forme et sensiblement aux mêmes dimensions que la périphérie interne 131 des collerettes 13.

Par la suite, lors d'une étape d'agencement représentée sur la figure 4, un écran de protection 22 de forme et de dimensions sensiblement égales à celles du tracé interne 211, à quelques millimètres près, par exemple inférieures de quelques millimètres, est disposé contre la face supérieure de la feuille support 20 de façon concentrique avec ledit tracé interne 211. L'écran de protection 22 est, par exemple, constitué par des films en papier ou en tout autre matériau approprié.

Lors d'une étape de superposition, des feuilles adhésives sont superposées les unes aux autres et collées sur la feuille support 20 de sorte à recouvrir l'ensemble de la silhouette 21 et par voie de conséquence, de sorte à recouvrir l'écran de protection 22.

Les feuilles adhésives présentent préférentiellement les mêmes dimensions que la feuille support 20.

Vient ensuite une étape de découpe mi-chair, lors de laquelle est réalisée une opération de découpe, en une unique passe, des feuilles adhésives selon au moins une partie du tracé interne 211 de la silhouette 21 et selon une profondeur de coupe correspondant à l'épaisseur de la totalité des feuilles adhésives.

L'étape de découpe est préférentiellement réalisée par un traceur connu en tant que tel de l'homme du métier. Le terme « mi-chair » est à la portée de l'homme du métier.

Une autre opération de découpe peut être réalisée lors de cette étape de découpe mi-chair, dans laquelle les languettes 136 des collerettes supérieure 134 et intermédiaires 135 sont formées par découpe selon des profondeurs différentes et selon des distances différentes par rapport au tracé externe 210, pour chacune des feuilles adhésives, de sorte que chaque languette 136 supérieure et languette 136 intermédiaire puisse laisser apparaître la périphérie interne 131 de la languette 136 immédiatement inférieure.

L'écran de protection 22 peut être retiré à la suite de l'étape de découpe, lors d'une étape d'extraction représentée sur la figure 5. Sur l'écran de protection 22 qui est retiré demeurent collées des portions de feuilles adhésives superposées. Lors de cette étape d'extraction, les découpes résultant de la formation des languettes 136 sont décollées de chaque collerette 13, de sorte que chaque languette 136 laisse apparaître la périphérie interne 131 de la languette 136 immédiatement inférieure.

Avantageusement, le retrait de l'écran de protection 22 est aisé dans la mesure où les feuilles adhésives n'ont pas pu adhérer à la feuille support 20.

En outre, relativement à un procédé conventionnel de fabrication de dispositifs de masquage 10, le procédé selon l'invention permet l'économie d'étapes d'échenillages. Le terme « échenillage » est connu de l'homme du métier pour signifier une opération de retrait de parties superflues d'un support adhésif une fois découpé.

Le fait de pouvoir en une unique découpe réaliser la périphérie interne 131 des collerettes 13 permet avantageusement de diminuer la durée de fabrication d'un dispositif de masquage 10.

Lors de l'étape de découpe mi-chair, la découpe est avantageusement réalisée de sorte à former des échancrures s'étendant vers le tracé externe 210 de sorte que chaque échancrure contourne une ouverture 14.

Avantageusement, une opération de découpe supplémentaire est réalisée sur le film de protection 12 du film de masquage 11 autour de chaque ouverture 14, de sorte que le film de protection 12 laisse apparaître une bande annulaire de la face inférieure dudit film de protection 12.

Le procédé comprend ensuite une étape de découpe pleine chair selon le tracé externe 210 de la silhouette 21 de sorte à isoler le dispositif de masquage 10, tel qu'il est représenté sur la figure 1. Concomitamment ou alternativement des ouvertures 14 sont découpées également en plaine chair, entre le tracé interne 211 et le tracé externe 210. Le terme « pleine chair » est à la portée de l'homme du métier.

Ainsi, un opercule 15 transparent peut ensuite être collé contre chaque bande annulaire de sorte à recouvrir chaque ouverture 14, lors d'une étape d'application représentée sur la figure 2.

À l'issu de ce procédé, le film de masquage 11 tel que décrit ci-avant est issu de la feuille support 20 et les collerettes 13 telles que décrites ci-avant sont issues des feuilles adhésives. L'ensemble formé notamment par un film de masquage 11 sur lequel sont collées des collerettes 13 forme un dispositif de masquage 10 selon l'invention.

De manière plus générale, il est à noter que les modes de mise en œuvre et de réalisation de l'invention considérés ci-dessus ont été décrits à titre d'exemples non limitatifs et que d'autres variantes sont par conséquent envisageables.

## Revendications

1. Dispositif de masquage (10) d'une zone à masquer, comprenant :
- un film de masquage (11) comprenant une face inférieure adhésive contre laquelle est collée de manière amovible un film de protection (12),
- Une pluralité de collerettes (13) superposées et collées les unes aux autres de manière amovible, dont une dite « collerette inférieure » (133) est collée à une face supérieure du film de masquage (11) opposée à la face inférieure, chacune des collerettes (13) étant délimitée entre une périphérie interne (131) et une périphérie externe (132), les périphéries externes (132) des collerettes (13) étant affleurantes les unes avec les autres, et les périphéries internes des collerettes (13) étant au moins en partie affleurantes les unes avec les autres.

2. Dispositif de masquage (10) selon la revendication 1, dans lequel la périphérie interne (131) de chaque collerette (13) est configurée de sorte à former une languette (135) s'étendant vers l'intérieur du film de masquage (11), chaque languette (135) étant configurée de sorte à être dépourvue de capacité adhésive sur au moins une portion de sa surface s'étendant depuis la périphérie interne (131).

3. Dispositif de masquage (10) selon l'une des revendications 1 ou 2, dans lequel le film de masquage (11) est pourvu d'ouvertures (14) traversantes, la périphérie de chaque ouverture (14) présentant une forme oblongue s'étendant selon une direction sensiblement parallèle ou sensiblement tangente à la direction d'une portion de la périphérie externe (132) des collerettes (13) dont elle est voisine.

4. Dispositif de masquage (10) selon l'une des revendications 1 ou 2, dans lequel le film de masquage (11) est pourvu d'ouvertures (14) et dans lequel les collerettes (13) sont configurées de sorte qu'au voisinage des ouvertures (14), leur périphérie interne (131) forme une échancrure dimensionnée de sorte que ladite échancrure soit interposée entre chaque ouverture (14) et la périphérie externe (132).

5. Dispositif de masquage (10) selon la revendication 4, dans lequel chaque échancrure forme un arc de cercle concave et est configurée de sorte qu'une ouverture (14) est agencée dans la concavité de ladite échancrure.

6. Procédé de fabrication d'un dispositif de masquage (10) selon l'une des revendications 1 à 5, comprenant les étapes de :
- Impression d'une silhouette (21) sur une face supérieure d'une feuille support (20) comprenant une face inférieure adhésive sur laquelle est collée une feuille de protection, ladite silhouette (21) correspondant sensiblement à la forme des périphéries externes (132) des collerettes (13), par un tracé externe (210), et à la forme des périphéries internes (131) des collerettes (13), par un tracé interne (211),
- Agencement d'un écran de protection (22) présentant des dimensions sensiblement égales à celles du tracé interne (211), sur la silhouette (21) de façon concentrique audit tracé interne (211),
- Superposition d'une pluralité de feuilles adhésives sur la feuille support (20) de sorte à recouvrir l'ensemble de la silhouette (21) et de l'écran de protection,
- Découpe mi-chair, en une même passe, des feuilles adhésives selon au moins une partie du tracé interne (211) de la silhouette (21) et selon une profondeur de coupe correspondant à l'épaisseur de la totalité desdites feuilles adhésives,
- Extraction des découpes réalisées dans les feuilles adhésives et de l'écran de protection associé,
- Découpe pleine chair selon le tracé externe (210) de la silhouette (21).

7. Procédé de fabrication selon les revendications 6 et 3, comprenant les étapes de :
- Découpe pleine chair d'ouvertures (14) entre le tracé interne (211) et le tracé externe (210) de la silhouette (21),
- Découpe mi-chair de la feuille de protection autour de chaque ouverture (14) de sorte à laisser apparaître une bande annulaire de la face adhésive du film destinée à recevoir un opercule (15).

8. Procédé de fabrication selon la revendication 7, comprenant une étape d'application d'un opercule (15) transparent contre chacune des bandes annulaires de sorte que lesdites vignettes soient collées contre la face inférieure de la feuille support (20) et qu'elles recouvrent chaque ouverture (14).

9. Procédé de fabrication selon les revendications 6 et 4, comprenant une étape de découpe pleine chair d'ouvertures (14) entre le tracé interne (211) et le tracé externe (210) de la silhouette (21), et dans lequel, lors de l'étape de découpe mi-chair, la découpe est réalisée de sorte à former des échancrures s'étendant depuis le tracé interne (211) vers le tracé externe (210), de sorte que chaque échancrure contourne une ouverture (14).

## Patentansprüche

1. Vorrichtung zur Maskierung (10) eines zu maskierenden Bereichs, umfassend:
- Einen Maskierfilm (11), der eine haftende Unterseite umfasst, an die ein Schutzfilm (12) ablösbar geklebt ist,
- Eine Vielzahl von Manschetten (13), die übereinandergelegt und ablösbar aneinandergeklebt sind, von denen eine sogenannte "untere Manschette" (133) an eine der Unterseite gegenüberliegende Oberseite des Maskierfilms (11) geklebt ist, wobei jede der Manschetten (13) zwischen einem Innenrand (131) und einem Außenrand (132) begrenzt ist, wobei die Außenränder (132) der Manschetten (13) miteinander bündig sind, und die Innenränder der Manschetten (13) mindestens zum Teil miteinander bündig sind.

2. Maskiervorrichtung (10) nach Anspruch 1, wobei der Innenrand (131) jeder Manschette (13) so ausgelegt ist, dass er eine Lasche (135) bildet, die sich zur Innenseite des Maskierfilms (11) erstreckt, wobei jede Lasche (135) so ausgelegt ist, dass sie an mindestens einem Abschnitt ihrer Fläche, der sich vom Innenrand (131) aus erstreckt, keine Haftfähigkeit aufweist.

3. Maskiervorrichtung (10) nach einem der Ansprüche 1 oder 2, wobei der Maskierfilm (11) mit Durchgangsöffnungen (14) versehen ist, wobei der Rand jeder Öffnung (14) eine längliche Form aufweist, die sich in eine im Wesentlichen parallel oder im Wesentlichen tangential zur Richtung eines Abschnitts des Außenrandes (132) der Manschetten (13), an die sie angrenzt, verlaufende Richtung erstreckt.

4. Maskiervorrichtung (10) nach einem der Ansprüche 1 oder 2, wobei der Maskierfilm (11) mit Öffnungen (14) versehen ist, und wobei die Manschetten (13) so ausgelegt sind, dass ihr Innenrand (131) in der Nähe der Öffnungen (14) eine Ausbuchtung bildet, die so bemessen ist, dass die Ausbuchtung zwischen jeder Öffnung (14) und dem Außenrand (132) eingefügt ist.

5. Maskiervorrichtung (10) nach Anspruch 4, wobei jede Ausbuchtung einen konkaven Kreisbogen bildet und so ausgelegt ist, dass eine Öffnung (14) in der Konkavität der Ausbuchtung angeordnet ist.

6. Verfahren zur Herstellung einer Maskiervorrichtung (10) nach einem der Ansprüche 1 bis 5, das die Schritte umfasst des:
- Druckens eines Umrisses (21) auf eine Oberseite einer Trägerfolie (20), die eine haftende Unterseite umfasst, an welche eine Schutzfolie geklebt ist, wobei der Umriss (21) im Wesentlichen mit einer äußeren Linie (210) der Form der Außenränder (132) der Manschetten (13), und mit einer inneren Linie (211) der Form der Innenränder (131) der Manschetten (13) entspricht,
- Anordnens eines Schutzschirms (22), der Abmessungen aufweist, die im Wesentlichen denen der inneren Linie (211) gleich sind, konzentrisch zur inneren Linie (211) auf dem Umriss (21),
- Übereinanderlegens einer Vielzahl von Haftfolien auf der Trägerfolie (20), sodass der Umriss (21) und der Schutzschirm in ihrer Gänze bedeckt werden,
- teilweisen Schneidens der Klebefolien in einem Durchgang auf mindestens einem Teil der inneren Linie (211) des Umrisses (21) und auf einer Schnitttiefe, die der Dicke der Gesamtheit der Klebefolien entspricht,
- Entfernens der in den Klebefolien ausgeführten Ausschnitte und des zugehörigen Schutzschirms,
- vollständigen Schneidens entlang der äußeren Linie (210) des Umrisses (21).

7. Herstellungsverfahren nach den Ansprüchen 6 und 3, das die Schritte umfasst des:
- vollständigen Schneidens von Öffnungen (14) zwischen der inneren Linie (211) und der äußeren Linie (210) des Umrisses (21),
- teilweisen Schneidens der Schutzfolie um jede Öffnung (14) herum, sodass sich ein ringförmiger Streifen der Haftseite des Films ergibt, der dazu bestimmt ist, eine Abdeckfolie (15) aufzunehmen.

8. Herstellungsverfahren nach Anspruch 7, das einen Schritt des Aufbringens einer transparenten Abdeckfolie (15) auf jeden der ringförmigen Streifen so umfasst, dass die Etiketten an die Unterseite der Trägerfolie (20) geklebt werden und dass sie jede Öffnung (14) bedecken.

9. Herstellungsverfahren nach den Ansprüchen 6 und 4, das einen Schritt des vollständigen Schneidens von Öffnungen (14) zwischen der inneren Linie (211) und der äußeren Linie (210) des Umrisses (21) umfasst, und wobei beim Schritt des teilweisen Schneidens das Schneiden so ausgeführt wird, dass Ausbuchtungen gebildet werden, die sich von der inneren Linie (211) zur äußeren Linie (210) so erstrecken, dass jede Ausbuchtung um eine Öffnung (14) herumläuft.

## Claims

1. Device (10) for masking an area to be masked, comprising:
- a masking film (11) comprising an adhesive bottom face against which a protective film (12) is removably attached,
- A plurality of flanges (13) overlaid and attached to one another in a removable manner, of which one so-called "bottom flange" (133) is attached to a top face of the masking film (11) opposite the bottom face, each of the flanges (13) being delimited between an inner periphery (131) and an outer periphery (132), the outer peripheries (132) of the flanges (13) being flush with one another, and the inner peripheries of the flanges (13) being at least partially flush with one another.

2. Masking device (10) according to claim 1, wherein the inner periphery (131) of each flange (13) is configured so as to form a tab (135) extending towards the inside of the masking film (11), each tab (135) being configured so as to be devoid of adhesive capability over at least a portion of the surface thereof extending from the inner periphery (131).

3. Masking device (10) according to one of claims 1 or 2, wherein the masking film (11) is provided with through openings (14), the periphery of each opening (14) having an oblong shape along a substantially parallel or substantially tangent direction to the direction of a portion of the outer periphery (132) of the flanges (13) adjacent thereto.

4. Masking device (10) according to one of claims 1 or 2, wherein the masking film (11) is provided with openings (14) and wherein the flanges (13) are configured such that, in the vicinity of the openings (14), the inner periphery (131) thereof forms a recess designed such that said recess is inserted between each opening (14) and the outer periphery (132).

5. Masking device (10) according to claim 4, wherein each recess forms a concave arc of a circle and is configured such that an opening (14) is arranged in the concavity of said recess.

6. Method for manufacturing a masking device (10) according to one of claims 1 to 5, comprising the steps of:
- Printing a pattern (21) on a top face of a support sheet (20) comprising an adhesive bottom face whereon a protective sheet is attached, said pattern (21) corresponding substantially to the shape of the outer peripheries (132) of the flanges (13), via an outer outline (210), and to the shape of the inner peripheries (131) of the flanges (13), via an inner outline (211),
- Arranging a protective screen (22) having dimensions substantially equal to those of the inner outline (211), on the pattern (21) concentrically with said inner outline (211),
- Overlaying a plurality of adhesive sheets on the support sheet (20) so as to cover the entire pattern (21) and the protective screen,
- Kiss-cutting, in the same pass, the adhesive sheets along at least a part of the inner outline (211) of the pattern (21) and along a cutting depth corresponding to the thickness of all of said adhesive sheets,
- Removing the cut areas made in the adhesive sheets and the associated protective screen,
- Through-cutting along the outer outline (210) of the pattern (21).

7. Manufacturing method according to claims 6 and 3, comprising the steps of:
- Through-cutting openings (14) between the inner outline (211) and the outer outline (210) of the pattern (21),
- Kiss-cutting the protective sheet around each opening (14) so as to reveal an annular strip of the adhesive face of the film intended to receive a cover seal (15).

8. Manufacturing method according to claim 7, comprising a step of applying a transparent cover seal (15) against each of the annular strips such that said stickers are attached against the bottom face of the support sheet (20) and that they cover each opening (14).

9. Manufacturing method according to claims 6 and 4, comprising a step of through-cutting openings (14) between the inner outline (211) and the outer outline (210) of the pattern (21), and wherein, during the kiss-cutting step, the cutting is carried out so as to form recesses extending from the inner outline (211) to the outer outline (210), such that each recess goes around an opening (14).
